Europäisches Patentamt

European Patent Office

Office européen des brevets

(11) Veröffentlichungsnummer: **0 215 472 B1**

# EUROPÄISCHE PATENTSCHRIFT

(45) Veröffentlichungstag der Patentschrift: **31.07.91**

(51) Int. Cl.⁵: **B01D 53/04**, B01D 53/26

(21) Anmeldenummer: **86112786.8**

(22) Anmeldetag: **16.09.86**

(54) Verfahren und Vorrichtung zum Abscheiden und Rückgewinnen von flüchtigen Lösungsmitteln.

(30) Priorität: **18.09.85 DE 3533313**

(43) Veröffentlichungstag der Anmeldung:
**25.03.87 Patentblatt 87/13**

(45) Bekanntmachung des Hinweises auf die
Patenterteilung:
**31.07.91 Patentblatt 91/31**

(84) Benannte Vertragsstaaten:
**AT CH DE FR GB LI NL SE**

(56) Entgegenhaltungen:
**DE-A- 2 214 663**
**DE-C- 554 209**
**FR-A- 1 003 705**
**GB-A- 2 106 798**

(73) Patentinhaber: **OTTO OEKO-TECH GMBH & CO. KG**
**Gustav-Heinemann-Ufer 54**
**W-5000 Köln 51(DE)**

(72) Erfinder: **Schweitzer, Stefan**
**Schömkensweg 28**
**W-4050 Mönchengladbach(DE)**
Erfinder: **Golde, Ernst**
**Grönkesdyk 12**
**W-4150 Krefeld(DE)**
Erfinder: **Mathews, Waldemar, Dr.**
**Am Schwarzwasser 2**
**W-5010 Bergheim(DE)**

(74) Vertreter: **Münzhuber, Robert, Dipl.-Phys.**
**Patentanwalt Rumfordstrasse 10**
**W-8000 München 5(DE)**

## Beschreibung

Die Erfindung betrifft ein Verfahren und eine Vorrichtung zum Abscheiden und Rückgewinnen von flüchtigen Lösungsmitteln aus wasserdampfhaltiger Abluft von Trockenreinigungsmaschinen, Metallentfettungsanlagen, Anlagen zum Reinigen von elektrischen Leiterplatten, Lösungsmittelbädern und ähnlichen Anlagen.

Aus der DE-A-554 209 ist ein Verfahren zur Rückgewinnung organischer Dämpfe aus feuchten Gasen bekannt, bei dem die Abluft durch regenerierbare Molekularsiebe hindurchgeleitet und dann in die Atmosphäre abgegeben wird, wobei die Abluft zunächst durch eine ausschließlich den Wasserdampf und anschließend durch eine ausschließlich die Lösungsmitteldämpfe adsorbierende Molekularsiebpackung hindurchgeleitet wird und die beiden Molekularsiebpackungen unabhängig voneinander durch Erhitzen mittels Luft oder Inertgas regeneriert werden. Eine direkte Rückführung der wiedergewonnenen organischen Lösungsmittel in einen Arbeitsprozeß erfolgt dabei nicht.

Aufgabe der vorliegenden Erfindung ist es deshalb, das erwähnte Verfahren und die das Verfahren durchführende Vorrichtung so zu verbessern, daß bei seiner Anwendung bei Trockenreinigungsmaschinen, Metallentfettungsanlagen, Anlagen zum Reinigen von elektrischen Leiterplatten, Lösungsmittelbädern und ähnlichen Anlagen auf wirtschaftliche Weise nicht nur eine wirkungsvolle Abscheidung des Wasserdampfs und der Lösungsmitteldämpfe erfolgt, sondern auch das rückzugewinnende Lösungsmittel im wesentlichen wasser frei anfällt und in den Arbeitsprozeß der Anlage unmittelbar rückführbar ist.

Ein erstes erfindungsgemäßes Lösungsverfahren ist im Patentanspruch 1 gekennzeichnet, ein zweites erfindungsgemäßes Lösungsverfahren im Patentanspruch 2. Dabei werden bei beiden Lösungsverfahren jeweils eine Wasserdampf adsorbierende Molekularsiebpackung und eine die Lösungsmitteldämpfe adsorbierende Molekularsiebpackung verwendet, wobei sich jedoch beim ersten Lösungsverfahren die beiden Packungen in gesonderten Desorptionskreisen befinden, wohingegen beim zweiten Lösungsverfahren die beiden Packungen zwar im gleichen Desorptionskreis untergebracht sind, die Desorption jedoch mit zwei unterschiedlichen Temperaturen erfolgt. Kommt es auf einen hohen Grad an Wasserfreiheit des rückgewonnenen Lösungsmittels an, dann ist das erste Verfahren vorzuziehen, wohingegen bei geringeren Ansprüchen an die Wasserfreiheit mit dem zweiten Verfahren auszukommen ist.

Eine Vorrichtung zur Durchführung des Verfahrens nach Anspruch 1 ist im Anspruch 6, eine Vorrichtung zur Durchführung des Verfahrens nach Anspruch 2 im Anspruch 10 gekennzeichnet.

Auf der Zeichnung zeigen:

Fig. 1 eine Schemaskizze zur Erläuterung einer Ausführungsform der erfindungsgemäßen Vorrichtung für einen kontinuierlichen Betrieb, und

Fig. 2 eine Schemaskizze zur Erläuterung einer anderen Ausführungsform der erfindungsgemäßen Vorrichtung.

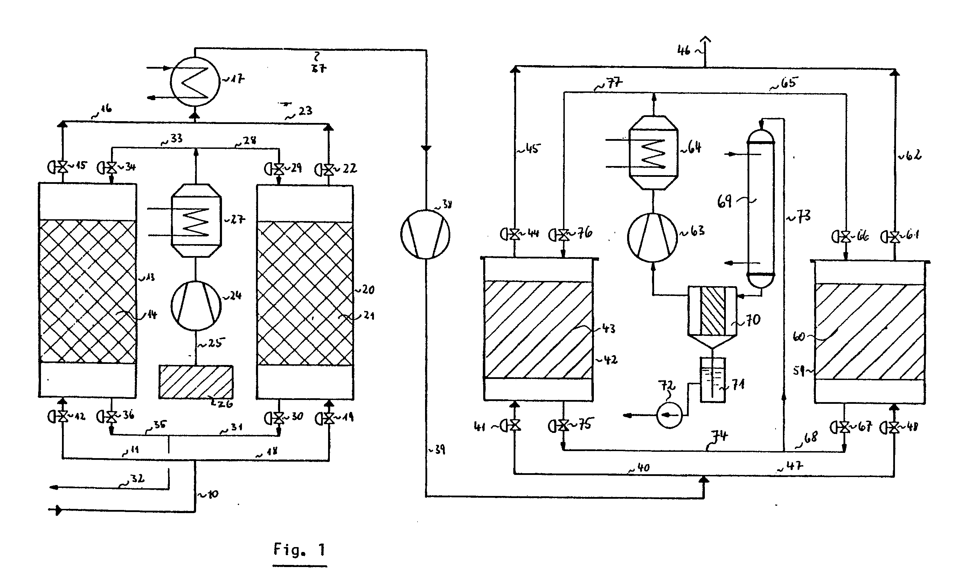

Bei der Vorrichtung von Fig. 1 werden die zu behandelnden Abgase, die sowohl Feuchtigkeit (Wasserdampf) als auch Lösungsmittelrückstände (Lösungsmitteldämpfe) enthalten, über eine Rohrleitung 10 zugeführt. Die Rohrleitung 10 verzweigt sich, wobei die eine Zweigleitung 11 über eine Klappe 12 zu einem Adsorptionsbehälter 13 führt, in welchem sich eine Molekularsiebpackung 14 befindet, und zwar von einem, an sich bekannten, Wasserdampf adsorbierenden Typ. Diese Molekularsiebpackung 14 wird von unten nach oben vom Wasserdampf durchströmt, wobei die Luftfeuchtigkeit bis auf einen Taupunkt von max. -80° C reduziert wird, ohne daß dabeieine nennenswerte Adsorption des im Abgas enthaltenden Lösungsmitteldampfeserfolgt. Über eine Klappe 15 und eine Leitung 16 gelangt das von der Feuchtigkeit befreite Abgas zu einem Wärmetauscher 17, in welchem es von der Adsorptionswärme befreit und auf etwa +5° C abgekühlt wird.

Von der Abgasleitung 10 geht an der erwähnten Verzweigung eine zweite Leitung 18 ab, die über eine Klappe 19 zu einem zweiten Adsorptionsbehälter 20 führt, in welchem sich eine Molekularsiebpackung 21 befindet. Behälter 20 und Molekularsiebpackung 21 sind mit dem Behälter 13 und der Molekularsiebpackung 14 identisch. Vom Behälter 20 geht über eine Klappe 22 eine Leitung 23 ab, die, wie die vorerwähnte Leitung 16, zum Wärmetauscher 17 führt. Während nun der Adsorptionsbehälter 13 beladen wird (die Klappen 12 und 15 sind offen) wird der vorher beladene Behälter 20, dessen Klappen 19 und 22 geschlossen sind, regeneriert. Hierzu wird von einem Gebläse 24 über eine Leitung 25 von einem Filter 26 Luft, Inertgas oder Reingas aus einer Leitung 46 angesaugt und einem Aufheizer 27 zugeführt.

In diesem wird die Luft bzw. das Inertgas oder das Reingas entweder direkt (elektrisch) oder indirekt (Dampf oder Wärmeträgeröl) auf eine Temperatur zwischen 150° C und 200° C erhitzt. Die heißen Gase gelangen dann über eine Leitung 28 und eine -offene- Klappe 29 in den Adsorptionsbehälter 20 und durchströmen die Molekularsiebpackung von oben nach unten. Dabei wird das in der Packung 21 adsorbierte Wasser ausgetrieben, und der Wasserdampf gelangt über eine Klappe 30 und eine Leitung 31 zu einer Auslaßleitung 32, aus welcher er in die Atmosphäre austritt. Nach der Regeneration der Molekularsiebpackung 21 wird der Erhitzer 27 abgeschaltet und die Molekularsiebpackung 21 kaltgeblasen, indem dem Gebläse 24 als Kühlluft Reingas von der Leitung 46 zugeführt wird.

Nach erfolgter Regeneration und Abkühlung der Molekularsiebpackung 21 werden die Adsorptionsbehälter 13 und 20 umgeschaltet, d.h. es wird die Molekularsiebpackung 14 regeneriert und die Molekularsiebpackung 21 beladen. Für den Regenerationsvorgang weist der Behälter 13 - ähnlich wie der Behälter 20 - eine vom Erhitzer 27 herführende Leitung 33 mit Klappe 34 sowie eine zur Auslaßleitung 32 führende Leitung 35 mit Klappe 36 auf.

Nach der Adsorption der Feuchtigkeit an einer der beiden Molekularsiebpackungen 14, 21 und Abkühlung im Wärmetauscher 17 wird das Abgas über eine Leitung 37 von einem Gebläse 38 angesaugt und über eine Leitung 39 einem zweiten Paar von Adsorptionsbehältern zugeführt. So kann das Abgas über eine Zweigleitung 40 und eine Klappe 41 zu einem Adsorptionsbehälter 42 gelangen, in welchem sich eine Molekularsiebpackung 43 befindet. Die Molekularsiebpackung 43 ist - in bekannter Weise - so ausgelegt, daß sie die im Abgas befindlichen Lösungsmitteldämpfe zu adsorbieren vermag. Das Abgas durchströmt also die Molekularsiebpackung 43 von unten nach oben, wobei es von den Lösungsmitteldämpfen befreit wird, und gelangt dann über eine Klappe 44 und eine Leitung 45 zu einer Auslaßleitung 46, aus der das nunmehr sowohl von Feuchtigkeit als auch von Lösungsmitteldämpfen befreite Abgas in die Atmosphäre austritt.

Das vom Gebläse 38 über die Leitung 39 zugeführte Abgas kann aber auch, je nach Schaltung der Klappen, über eine Zweigleitung 47 und eine Klappe 48 in einen Adsorptionsbehälter 59 gelangen, in welchem sich eine Molekularsiebpackung 60 befindet. Behälter 59 und Packung 60 sind identisch mit dem Behälter 42 und der Packung 43. Über eine Klappe 61 und eine Leitung 62 gelangt das den Behälter 50 durchströmende Abgas ebenfalls zu der vorerwähnten Auslaßleitung 46.

Während nun der Behälter 42 beladen wird, wird der Behälter 59 regeneriert. Zu diesem Zweck fördert ein Gebläse 63 im geschlossenen Kreislauf Luft oder Inertgas zu einem Erhitzer 64. In diesem Erhitzer 64 erfolgt eine direkte (elektrisch) oder indirekte (Dampf oder Wärmeträgeröl) Erhitzung der Luft bzw. des Inertgases auf eine Temperatur zwischen 40°C und 250°C. Das erhitzte Gas gelangt über eine Leitung 65 und eine Klappe 66 in den Adsorptionsbehälter 59, wobei es die Molekularsiebpackung 60 von oben nach unten durchströmt und dabei das in einem vorherigen Beladevorgang adsorbierte Lösungsmittel austreibt. Die Lösungsmitteldämpfe werden über eine Klappe 67 und eine Leitung 68 einem Kondensationskühler 69 zugeführt, in welchem eine derartige Abkühlung erfolgt, daß der überwiegende Anteil der Lösungsmitteldämpfe verflüssigt wird. Entsprechend dem Taupunkt des mit Lösungsmittel beladenen Gasstrom wird der Kondensationskühler 69 mit Kühlwasser (etwa 20°C), Sole (etwa -20°C bis +5°C) oder Kältemittel (etwa -40°C bis -20°C) beschickt. In einem Tropfenabscheider 70 werden die flüssigen Lösungsmittel vom Kreislaufgas getrennt und fließen in eine Pumpvorlage 71. Von dort werden sie mit einer Pumpe 72 in den - nicht gezeichneten - Lösemitteltank zurückgepumpt. Die von den Lösungsmitteldämpfen im wesentlichen befreite Kreisluft gelangt dagegen über eine Leitung 73 wieder auf die Saugseite des Gebläses 63, wird also dem Kreislauf wieder zugeführt.

Nach einer Zeitdauer von 1-5 Stunden wird die Heizphase durch Ausschalten des Gebläses 63 und des Erhitzers 64 beendet. In der anschließenden Abkühlphase werden kalte Abgase vom Gebläse 38 über die Leitungen 39 und 47 sowie die Klappe 48 in den Behälter 59 geblasen, und durchströmen dabei die Molekularsiebpackung 60 von unten nach oben (die Klappe 67 ist während dieses Vorgangs geschlossen). Das kalte Abgas kühlt das Molekularsieb ab und tritt über die Klappe 66 aus dem Behälter aus (die Klappe 61 ist während des Vorgangs geschlossen). Über die Leitung 65 durchströmt das jetzt erwärmte Abgas den ausgeschalteten Erhitzer 64 und das ausgeschaltete Gebläse 63 und gelangt über die Leitung 73 und den Tropfenabscheider 70 in den Kondensationswärmetauscher 69. Hier wird das Abgas heruntergekühlt und strömt über eine Leitung 73 und eine Leitung 74 sowie eine Klappe 75 in den Adsorptionsbehälter 42. Dabei ist die Klappe 41 geschlossen. Das Abgas steigt durch das Molekularsieb 43 nach oben, das sich während der Kühlphase des Molekularsiebes 60 noch in der Beladephase befindet. Es tritt an der Oberseite des Adsorptionsbehälters 42 über die Klappe 44 in die Leitungen 45 und 46 und entweicht in die Atmosphäre. Eine an der Oberseite des Adsorptionsbehälters befindliche, weitere Klappe 76 ist dabei geschlossen; diese Klappe 76 liegt in einer Leitung 77, die sowohl mit der Leitung 65 als auch dem Auslaß des Erhitzers 64 in Verbindung steht.

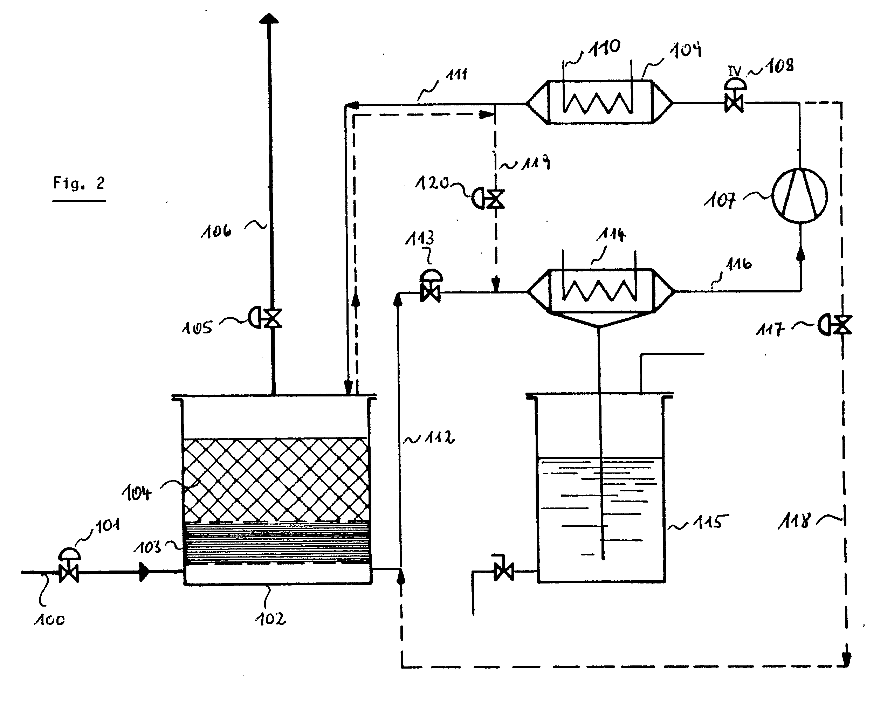

Nach 1-3 Stunden ist die Kühlphase des Behälters 59 beendet, sodaß nun eine Umschaltung der Beladung vom Behälter 42 auf den Behälter 59 erfolgen kann. Während der Beladung des Behälters 59 wird der Behälter 42 in entsprechender Weise regeneriert. Eine zweite Ausführungsform der erfindungsgemäßen Vorrichtung wird nun anhand von Fig. 2 erläutert.

Die zu behandelnde, Feuchtigkeit und Lösungsmitteldämpfe enthaltende Abluft wird hier der Vorrichtung über eine Leitung 100 zugeführt, die der Leitung 10 von Fig. 1 entspricht. Die Abluft gelangt über eine Klappe 101 in einen Adsorptionsbehälter 102, wobei sie im Bereich des Behälterbodens einströmt. Im Behälter 102 befindet sich ein unteres Sieb 103 aus Molekularsieben oder aus Siliziumoxid, sowie ein oberes Siebbett 104 aus Molekularsieben. Im Molekularsiebbett 103 wird vorwiegend der im Abgas enthaltene Wasserdampf adsorbiert, während die Lösungsmittelrückstände, beispielsweise Chlor-Kohlenwasserstoffe, im Siebbett 104 adsorbiert werden. Nachdem die Abluft den Behälter 102 von unten nach oben durchströmt hat und dabei von den Siebpackungen 103, 104 gereinigt worden ist, verläßt sie den Behälter 102 über eine Klappe 105 und eine Leitung 106 und kann in die Atmosphäre entlassen werden.

Wenn das Aufnahmevermögen der Siebpackung 103, 104 erschöpft ist, dann muß eine Regenerierung erfolgen. Die Feststellung dieses Zeitpunkts erfolgt beispielsweise bei der Behandlung der Abluft von Reinigungsmaschinen durch ein elektrisches Zählwerk, das die Anzahl der Türöffnungen der Reinigungsmaschine zählt und den Betreiber bei Erreichen einer bestimmten Zahl alarmiert. Für die Regeneration werden die Klappen 101 und 105 geschlossen und es erfolgt eine Regeneration mittels Heißluft oder Inertgas. Zu diesem Zweck fördert ein Gebläse 107 Luft über eine Klappe 108 zu einem Aufheizer 109 mit elektrischer Heizung 110(oder Dampf oder Thermalöl) und weiter über eine Rohrleitung 111 zum Adsorptionsbehälter 102, in welchen sie von oben her eintritt. Die auf 100-105°C aufgeheizte Luft oder Inertgas durchströmt zuerst das Siebbett 104 und dann das Siebbett 103, wobei zuerst das Siebbett 104 auf Desorptionstemperatur gebracht wird und nur das Lösemittel desorbiert. Da das Siebbett 103 bis zur Sättigung beladen ist, wird es vom Lösemittel durchströmt, ohne daß der Wasserdampf desorbiert. Über eine vom Boden des Behälters 102 abgehende Rohrleitung 112 gelangt die mit Lösemittel beladene Luft über eine Klappe 113 zu einem Wärmetauscher 114, der von Kühlwasser durchflossen ist; dabei kondensieren die Lösemittel und fließen in einen Tank 115 ab. Die vom Lösemittel befreite Luft strömt weiter durch eine Rohrleitung 116 zurück zum Gebläse 107; es handelt sich also um einen geschlossenen Umluftstrom. Nach etwa 1,5 Stunden wird der Tank 115 entleert und die Lufttemperatur mittels des Aufheizers 109 auf 106-180°C angehoben. Damit wird der im unteren Siebbett 103 adsorbierte Wasserdampf desorbiert, im Wärmetauscher 114 kondensiert und in den Tank 115 abgeschieden. Nach etwa 1,5 Stunden ist diese Desorption, die -wie erläutert im Gegenstrom zur Adsorption erfolgt, abgeschlossen.

Zur Beschleunigung der Abkühlung der Siebpackung 103, 104 wird nun eine aktive Kühlung mittels Luft durchgeführt. Dabei erfolgt diese Kühlung im Gleichstrom mit der Adsorption. Nach Abschalten des Aufheizers 109 werden deshalb die Klappen 113 und 108 geschlossen, und das Gebläse 107 fördert die Luft nach Öffnen einer Klappe 117 über eine Leitung 118 in den Behälter 102. Die Luft durchströmt die Siebpackung 103, 104 von unten nach oben und gelangt über die Leitung 111 und eine Leitung 119 mit jetzt offenen Klappe 120 sowie den Wärmetauscher 114 zurück zum Gebläse 107. Auch die Kühlung erfolgt somit in einem geschlossenen Kreislauf. Nach etwa einer Stunde ist die Siebpackung 103, 104 abgekühlt und somit wieder beladbar.

Bei kontinuierlich betriebenen Anlagen werden zweckmäßigerweise zwei Adsorptionsbehälter vorgesehen, auf die dann jeweils umgeschaltet werden kann, ähnlich wie im Fall der Vorrichtung von Fig. 1.

## Patentansprüche

1. Verfahren zum Abscheiden und Rückgewinnen von flüchtigen Lösungsmitteln aus wasserdampfhaltiger Abluft von Trockenreinigungsmaschinen, Metallentfettungsanlagen, Anlagen zum Reinigen von elektronischen Leiterplatten, Lösungsmittelbädern und ähnlichen Anlagen, bei dem die Abluft durch regenerierbare Molekularsiebe hindurchgeleitet und dann in die Atmosphäre abgegeben wird, wobei die Abluft zunächst durch eine ausschließlich den Wasserdampf und anschließend durch eine ausschließlich die Lösungsmitteldämpfe adsorbierende Molekularsiebpackung hindurchgeleitet wird und die beiden Molekularsiebpackungen unabhängig voneinander durch Erhitzen mittels Luft oder Inertgas regeneriert werden, dadurch gekennzeichnet, daß die ausschließlich Wasserdampf adsorbierende Molekularsiebpackung zur Atmosphäre hin, die ausschließlich Lösungsmitteldämpfe adsorbierende Molekularsiebpackung in einem geschlossenen Kreislauf regeneriert wird, und daß die Lösungsmitteldämpfe innerhalb des geschlossenen Kreislaufs an einem Kondensationswärmetauscher kondensiert und aufgefangen und zur Wiederverwendung zurückgeführt werden.

2. Verfahren zum Abscheiden und Rückgewinnen von flüchtigen Lösungsmitteln aus wasserdampfhaltiger Abluft von Trockenreinigungsmaschinen, Metallentfettungsanlagen, Anlagen zum Reinigen von elektronischen Leiterplatten, Lösungsmittelbädern und ähnlichen Anlagen, bei dem die Abluft durch regenerierbare Molekularsiebe hindurchgeleitet und dann in die Atmosphäre abgegeben wird, wobei die Abluft zunächst durch eine ausschließlich den Wasserdampf adsorbierende und anschließend durch eine ausschließlich die Lösungsmitteldämpfe adsorbierende Molekularsiebpackung hindurchgeleitet wird, dadurch gekennzeichnet, daß die beiden Molekularsiebpackungen durch zwei nacheinanderfolgende Erhitzungen unterschiedlicher Temperatur einer Desorption unterworfen werden, wobei die während der ersten Erhitzungsstufe entweichenden Lösemitteldämpfe und der während der zweiten Erhitzungsstufe entweichende Wasserdampf in einem Kondensationswärmetauscher kondensiert und die beiden Kondensate gesondert aufgefangen und die Lösemittel zur Wiederverwendung zurückgeführt werden.

3. Verfahren nach Anspruch 1 oder 2 für einen kontinuierlichen Betrieb, dadurch gekennzeichnet, daß die Abluft abwechselnd durch zwei parallel geschaltete Molekularsiebpackungspaare hindurchgeleitet wird, wobei sich jeweils ein Molekularsiebpackungspaar in der Beladephase, das andere in der Desorptionsphase befindet.

4. Verfahren nach einem der Ansprüche 1-3, dadurch gekennzeichnet, daß in der Desorptionsphase die Molekularsiebpackungen mittels Heißluft oder Heiß-Inertgas erhitzt werden, die in einer Richtung entgegengesetzt der Strömungsrichtung der in der Beladephase hindurchströmenden Abgase hindurchgeleitet wird.

5. Verfahren nach einem der Ansprüche 1-4, dadurch gekennzeichnet, daß nach der Desorptionsphase Kühlluft oder Kühlinertgas durch die Molekularsiebpackungen hindurchgeleitet wird, und zwar in einer Richtung gleich derjenigen der in der Beladephase hindurchströmenden Abgase.

6. Vorrichtung zur Durchführung des Verfahrens nach den Ansprüchen 1 oder 3-5, mit einer regenerierbaren Molekularsieb-Reinigungsstufe, gekennzeichnet durch zumindest einen Behälter (13,20) mit Wasserdampf adsorbierender Molekularsiebpackung (14, 21), durch zumindest einen weiteren Behälter (42,59) mit Lösungsmittel adsorbierender Molekularsiebpackung (43,60), durch einen Wärmetauscher (17), durch ein Gebläse (38), wobei Wärmetauscher (17) und Gebläse (38) einerseits mit verschließbare Klappen (15,22) aufweisenden Auslaßleitungen (16,23) der Wasserdampf adsorbierenden Molekularsiebbehälter (13,20) und andererseits über mit verschließbaren Klappen (41,48) versehenen Rohrleitungen (37,39,40,47) mit den Lösungsmitteldämpfe adsorbierenden Molekularsiebbehältern (42,59) verbunden sind, durch ein Gebläse (24), das in eine die Wasserdampf adsorbierenden Molekularsiebbehälter (13,20) und einen Erhitzer (27) enthaltende Leitung eingesetzt ist, und durch ein weiteres Gebläse (63), das in eine die Lösungsmitteldämpfe adsorbierenden Molekularsiebbehälter (42, 59), einen Erhitzer (64), den Kondensationswärmetauscher (69) und den Tropfenabscheider (70) enthaltende Ringleitung eingesetzt ist.

7. Vorrichtung nach Anspruch 6 dadurch gekennzeichnet, daß die Ringleitung über Klappen (67, 75) verschließbar ist und Tropfenabscheider (70) an einen Lösungsmitteltank (71) mit Abtauchung angeschlossen ist.

8. Vorrichtung nach Anspruch 6 oder 7, dadurch gekennzeichnet, daß die Molekularsiebpackungen (14, 21, 43, 60) aus Kugeln oder Zylinder einer Körnung von eins bis zehn Millimeter bestehen.

9. Vorrichtung nach einem der Ansprüche 6-8, dadurch gekennzeichnet, daß jeder Wasserdampf adsorbierende Molekularsiebbehälter (13, 20) zwei Auslaßleitungen (16, 35; 23,31) mit Verschließklappen (15, 36; 22, 30 aufweis wobei jeweils eine Leitung (16, 23) zu den Lösungsmitteldämpfe adsorbierenden Molekularsiebbehältern (42, 59), die andere Auslaßleitung (35, 31) zur Atmosphäre führt, und daß jeder der Lösungsmitteldämpfe adsorbierenden Molekularsiebbehälter (42, 59) zwei Auslaßleitungen (45, 74; 62, 68) mit Verschließklappen (44, 75; 61, 67) aufweist, wobei jeweils eine Leitung (45, 62) zur Atmosphäre, die andere Leitung (74, 68) zum Kondensationswärmetauscher (69) führt.

10. Vorrichtung zur Durchführung des Verfahrens nach einem der Ansprüche 2-5 mit einer regenerierbaren Molekularsieb-Reinigungsstufe, gekennzeichnet durch einen Molekularsiebbehälter (102), in welchem zwei Molekularsiebpackungen (103, 104) untergebracht sind, durch einen Kondensations-Wärmetauscher (114), der an eine durch eine Klappe (113) verschließbare Auslaßleitung (112) des Molekularsiebbehälters (102) angeschlossen ist und durch einen Lufterhitzer (109) mit Überbrückungsleitung (119), der in eine den Molekularsiebbehälter (102), den Kondensationswärmetauscher (114) und ein Gebläse (107) enthaltende Ringleitung eingesetzt ist.

11. Vorrichtung nach Anspruch 10, dadurch gekennzeichnet, daß zwei Molekularsiebbehälter (102) in Parallelschaltung vorgesehen sind, wobei sich jeweils ein Behälter in der Beladephase und der andere Behälter in der Desorptionsphase befindet.

**Claims**

1. A method for separating and recovering volatile solvents from water vapour-containing exhaust air from dry-cleaning machines, metal degreasing units, units for cleaning electronic printed circuit boards, solvent baths and similar units, in which the exhaust air is passed through regenerable molecular sieves and than released into the atmosphere, wherein the exhaust air is firstly led through a molecular sieve packing adsorbing exclusively the water vapour and then through a molecular sieve packing adsorbing only the solvent vapours and both molecular sieve packings are regenerated independently of each other by heating by means of air or inert gas,
characterised in that the molecular sieve packing adsorbing exclusively water vapour is regenerated towards the atmosphere, [and] the molecular sieve packing adsorbing exclusively the solvent vapours is regenerated in a closed circuit and in that the solvent vapours are condensed within the closed circuit at a condensation heat exchanger and collected and led back for repeated use.

2. A method for separating and recovering volatile solvents from water vapour-containing exhaust air from dry-cleaning machines, metal degreasing units, units for cleaning electronic printed circuit boards, solvent baths and similar units, in which the exhaust air is led through regenerable molecular sieves and then released into the atmosphere, wherein the exhaust air is firstly led through a molecular sieve packing adsorbing exclusively the water vapour and then through a molecular sieve packing adsorbing exclusively the solvent vapours, characterised in that both molecular sieve packings are subjected to desorption by two successive heatings at varying temperatures, wherein the solvent vapours escaping during the first heating stage and the water vapour escaping during the second heating stage condenses in a condensation heat exchanger and both condensates are collected separately and the solvents are led back for repeated use.

3. A method according to claim 1 or 2 for a continuous operation, characterised in that the exhaust air is led through alternately two molecular sieve packing pairs, connected in parallel, wherein in each case a molecular sieve packing pair is located in the loading phase, and the other in the desorption phase.

4. A method according to one of claims 1-3, characterised in that in the desorption phase the molecular sieve packings are heated by means of hot air or hot inert gas, which is led through in a direction opposing the flow direction of the exhaust gases flowing through in the loading phase.

5. A method according to one of claims 1 to 4, characterised in that after the desorption phase cooling air or cooling inert gas is led through the molecular sieve packings and, to be more precise, in a direction which is the same as that of the exhaust gases flowing through in the loading phase.

6. A device for carrying out the method according to claims 1 or 3 to 5, with a regenerable molecular sieve cleaning stage, characterised by at least one container (13,20), with a water vapour-adsorbing molecular sieve packing (14,21), by at least one further container (42, 59) with a solvent-adsorbing molecular sieve packing (43, 60), by a heat exchanger (17), by a blower (38), wherein on the one hand, the heat exchanger (17) and blower (38), are connected to outlet lines (16, 23) of the water vapour-adsorbing molecular sieve containers (13, 20) having sealable valves (15, 22) and, on the other hand, are connected by way of pipe lines (37, 39, 40, 47), provided with sealable valves (41, 48), to molecular sieve containers (42, 59), adsorbing the solvent vapours, by a blower (24), which is inserted into a line containing the water vapour-adsorbing molecular sieve containers (13, 20) and a heater (27), and by a further blower (63) which is inserted into a ring conduit containing the solvent vapour-adsorbing molecular sieve containers (42, 59), a heater (64), the condenser heat exchanger (69) and the droplet condenser (70).

7. A device according to claim 6, characterised in that the ring conduit is able to be sealed by way of valves (67, 75), and the droplet condenser (70) is connected to a solvent tank (71) with immersion.

8. A device according to claim 6 or 7, characterised in that the molecular sieve packings (14, 21, 43, 60) consist of beads or cylinders of a grain of one to ten millimetres.

9. A device according to claims 6 to 8, characterised in that each water vapour-adsorbing molecular sieve container (13,20) has two outlet lines (16, 35; 23, 31) with sealing valves (15, 36; 22, 30), wherein in each case a line (16, 23) leads to the solvent vapour-adsorbing molecular sieve containers (42, 59), and the other outlet line (35, 31) leads to the atmosphere, and in that each of the solvent vapour-adsorbing molecular sieve containers (42, 59) has two outlet lines (45, 74; 62, 68) with sealing valves (44, 75; 61, 67), wherein in each case a line (45, 62) leads to the atmosphere, and the other line (74, 68) to the condensation heat exchanger (69).

10. A device for carrying out the method according to one of claims 2 to 5, with a regenerable molecular sieve cleaning stage, characterised by a molecular sieve container (102), in which are accommodated two molecular sieve packings (103, 104), by a condensation heat exchanger (114), which is connected to an outlet line (112) of the molecular sieve container (102), able to be sealed by a valve (113), and by an air heater (109) with a bridging line (119), which is inserted into a ring conduit containing the molecular sieve container (102), the condensation heat exchanger (114) and a blower (107).

11. A device according to claim 10, characterised in that two molecular sieve containers (102) are provided in parallel connection, wherein in each case one container is located in the loading phase and the other container in the desorption phase.

**Revendications**

1. Procédé pour séparer et récupérer des solvants volatils à partir d'air, contenant de la vapeur d'eau, sortant de machines de nettoyage à sec, d'installations de dégraissage de métaux, d'installations de nettoyage de plaquettes à circuits imprimés électroniques, de bains de solvants et d'installations similaires, procédé dans lequel l'air sortant est envoyé à travers des tamis moléculaires régénérables, puis est rejeté dans l'atmosphère, l'air sortant étant envoyé d'abord à travers une garniture de tamis moléculaire adsorbant exclusivement la vapeur d'eau, puis à travers une garniture de tamis moléculaire adsorbant exclusivement les vapeurs de solvant, et les deux garnitures de tamis moléculaire étant régénérées indépendamment l'une de l'autre par chauffage au moyen d'air ou d'un gaz inerte, caractérisé en ce que la garniture de tamis moléculaire adsorbant exclusivement la vapeur d'eau est régénérée vers l'atmosphère et la garniture de tamis moléculaire adsorbant exclusivement les vapeurs de solvant est régénérée dans un circuit fermé, et en ce que les vapeurs de solvant sont condensées et captées dans le circuit fermé au niveau d'un échangeur de chaleur de condensation et sont recyclées en vue de leur réutilisation.

2. Procédé pour séparer et récupérer des solvants volatils à partir d'air, contenant de la vapeur d'eau, sortant de machines de nettoyage à sec, d'installations de dégraissage de métaux, d'installations de nettoyage de plaquettes à circuits imprimés électroniques, de bains de solvants et d'installations similaires, procédé dans lequel l'air sortant est envoyé à travers des tamis moléculaires régénérables, puis est rejeté dans l'atmosphère, l'air sortant étant envoyé d'abord à travers une garniture de tamis moléculaire adsorbant exclusivement la vapeur d'eau, puis à travers une garniture de tamis moléculaire adsorbant exclusivement les vapeurs de solvant, caractérisé en ce que les deux garnitures de tamis moléculaire sont soumises à une désorption par deux chauffages successifs à des températures différentes, les vapeurs de solvant qui se dégagent pendant la première étape de chauffage et la vapeur d'eau qui se dégage pendant la seconde étape de chauffage étant condensées dans un échangeur de chaleur de condensation, les deux condensats étant recueillis séparément et les solvants étant recyclés en vue de leur réutilisation.

3. Procédé selon la revendication 1 ou 2 pour une exploitation en continu, caractérisé en ce que l'air sortant est envoyé alternativement à travers deux paires de garnitures de tamis moléculaire disposées en parallèle, une paire de garnitures de tamis moléculaire se trouvant à tout moment dans la phase de chargement, tandis que l'autre est dans la phase de désorption.

4. Procédé selon l'une quelconque des revendications 1 à 3, caractérisé en ce que dans la phase de désorption, les garnitures de tamis moléculaire sont chauffées au moyen d'air chaud ou d'un gaz inerte chaud qui est envoyé dans un sens opposé au sens d'écoulement des gaz sortants qui les traversent dans la phase de chargement.

5. Procédé selon l'une quelconque des revendications 1 à 4, caractérisé en ce qu'à la suite de la phase de désorption, de l'air de reiroidissement ou du gaz inerte de refroidissement est envoyé à travers les garnitures de tamis moléculaire, et cela dans un sens qui est le même que celui des gaz sortants qui traversent ces garnitures dans la phase de chargement.

6. Dispositif pour l'exécution du procédé selon les revendications 1 ou 3 à 5, comportant un étage de purification à tamis moléculaire régénérable, caractérisé par au moins un recipient (13, 20) contenant une garniture de tamis moléculaire (14, 21) adsorbant la vapeur d'eau, par au moins un autre recipient (42, 59) contenant une garniture de tamis moléculaire (43, 60) adsorbant les solvants, par un échangeur de chaleur (17), par une soufflante (38), l'échangeur de chaleur (17) et la soufflante (38) étant raccordes d'un côté à des conduites de sortie (16, 23) des recipients (13, 20) de tamis moléculaire adsorbant la vapeur d'eau, conduites qui comportent des valves obturables (15, 22), et, de l'autre côté, au moyen de canalisations (37, 39, 40, 47) munies de valves obturables (41, 48), aux recipients (42, 59) de tamis moléculaire absorbant les vapeurs de solvant, par une soufflante (24) qui est intercalée dans une conduite contenant les récipients (13, 20) de tamis moléculaire adsorbant la vapeur d'eau et un réchauffeur (27), et par une autre soufflante (63) qui est intercalée dans une conduite circulaire contenant les récipients (42, 59) de tamis moléculaire adsorbant les vapeurs de solvant, un rechauffeur (64), l'échangeur de chaleur de condensation (69) et un pare-gouttes (70).

7. Dispositif selon la revendication 6, caractérisé en ce que la conduite circulaire peut être obturée au moyen de valves (67, 75) et le pare-gouttes (70) est relié à un réservoir de solvant (71) à tuyau plongeant.

8. Dispositif selon la revendication 6 ou 7, caractérisé en ce que les garnitures de tamis moléculaire (14, 21, 43, 60) sont faites de billes ou de cylindres ayant une granulometrie de 1 à 10 mm.

9. Dispositif selon l'une quelconque des revendications 6 à 8, caractérisé en ce que chaque récipient (13, 20) de tamis moléculaire adsorbant la vapeur d'eau comporte deux conduites de sortie (16, 35; 23, 31) munies de valves d'obturation (15, 36; 22, 30), une conduite (16, 23) de chacun d'entre eux aboutissant respectivement aux recipients (42, 59) de tamis moléculaire adsorbant les vapeurs de solvant et l'autre conduite de sortie (35, 31) débouchant dans l'atmosphere, et en ce que chacun des récipients (42, 59) de tamis moléculaire adsorbant les vapeurs de solvant comporte deux conduites de sortie (45, 74; 62, 68) avec des valves d'obturation (44, 75; 61, 67), l'une de ces conduites (45, 62) débouchant dans l'atmosphere et l'autre conduite (74, 68) aboutissant à l'échangeur de chaleur de condensation (69).

10. Dispositif pour l'execution du procédé selon l'une quelconque des revendications 2 à 5, comportant un etage de purification à tamis moléculaire régénérable, caractérisé par un récipient (102) de tamis moléculaire dans lequel sont placees deux garnitures de tamis moléculaire (103, 104), par un échangeur de chaleur de condensation (114) qui est raccorde à une conduite de sortie (112) du récipient de tamis moléculaire (102) obturable par une valve (113), et par un rechauffeur d'air (109) qui comporte une conduite de dérivation et qui est intercalé dans une conduite circulaire contenant le récipient de tamis moléculaire (102), l'échangeur de chaleur de condensation (114) et une soufflante (107).

11. Dispositif selon la revendication 10, caractérisé en ce qu'il est prévu deux recipients de tamis moléculaire (102) disposés en parallèle, l'un de ces récipients se trouvant à tout moment dans la phase de chargement tandis que l'autre récipient est dans la phase de désorption.

Fig. 1

EP 0 215 472 B1

Fig. 2